# EUROPÄISCHE PATENTSCHRIFT

(11) **EP 0 537 450 B1**
(45) Veröffentlichungstag und Bekanntmachung des Hinweises auf die Patenterteilung: **03.05.1995**
(21) Anmeldenummer: 92114490.3
(22) Anmeldetag: 26.08.1992
(51) Int. Cl.: B29B 7/48, B29C 47/64

(54) **Gleichdrallschneckenkneter**
Screw kneader with steady spin
Pétrisseur à vis à torsion uniforme

(30) Priorität: 15.10.1991 DE 4134026
(43) Veröffentlichungstag der Anmeldung: 21.04.1993
(73) Patentinhaber: Werner & Pfleiderer GmbH, 70469 Stuttgart (DE)
(72) Erfinder: Uhland, Eberhard, Dr., W-7120 Bietigheim-Bissingen (DE); Wobbe, Hans, Dr., W-7253 Malmsheim (DE)

(56) Entgegenhaltungen:
- DE-A- 2 117 997
- FR-A- 1 442 473
- FR-A- 2 004 549
- FR-A- 2 563 462
- US-A- 3 680 844

## Beschreibung

Die Erfindung betrifft einen Gleichdrallschneckenkneter mit drehantreibbaren Schneckenwellen in einem Gehäuse mit achsparallelen und einander durchdringenden Gehäusebohrungen, mit Förderabschnitten in der Einzugs- und Austrittszone, die aus sich gegenseitig abstreifenden Schnecken gebildet sind und einer Mischzone mit rückfördernd ausgebildetem Mischabschnitt und einen Materialdurchtritt bewirkenden Durchbrüchen längs einer Steigung in den Schneckenstegen des Mischabschnitts.

Bei einem aus der DE-OS 15 54 761 bekannten Gleichdrallschneckenkneter dieser Art ist zwischen dem Mischabschnitt und den Förderabschnitten ein zylindrischer bzw. kegeliger Übergangsabschnitt angeordnet, der in nachteiliger Weise zur Bildung eines Materialwulstes in der Mischzone führt.
Der Materialübergang zwischen der Mischzone und den Förderabschnitten ist daher unstetig und demzufolge die Verweildauer des Mischgutes ungleich.
Da in diesen Übergangsabschnitten die selbstreinigende Wirkung der Förder- und Mischelemente und der Gehäusebohrungen zwangsläufig aufgehoben ist, bilden sich Ablagerungen, die zur Qualitätsminderung des Mischgutes führen. Ein Einmischen von Zusatzstoffen zu einer Grundkomponente ist nicht vorgesehen.

Bei einer weiteren aus der DE OS 16 57 574 bekannten ebenfalls kontinuierlich arbeitenden Mehrzweckmisch-und Knetvorrichtung sind versetzt angeordneten Knetscheibenabschnitten Übergangsteile so angepasst, dass eine selbstreinigende Wirkung auch im Bereich der gebildeten Übergangsflächen erhalten bleibt. Diese Selbstreinigung hat jedoch keinen Einfluss auf die Wandung der Gehäusebohrungen, so dass zumindest in diesem Bereich sogenannte tote Zonen gebildet sind. Die hier paarweise symmetrisch zusammenwirkenden Übergangsteile dienen ausschliesslich der Bildung von Knetflächen und damit der zerstreuenden Behandlung des Mischgutes durch Einleitung von Scherenergie. Da keine Mischgutströme gebildet werden, unterbleibt ohnehin jegliche Aufteilung und Verteilung des Mischgutes innerhalb der Knetvorrichtung. Sie ist daher nicht geeignet für die Einmischung und homogene Verteilung von Zugabekomponenten.

Der Erfindung liegt die Aufgabe zugrunde, das verteilende Mischen von Komponenten einer Gesamtmischung entscheidend zu verbessern.

Dies wird nach der Erfindung dadurch erreicht, dass der Mischabschnitt aus Schneckenelementen gebildet ist mit in Förderrichtung fortlaufenden förderwirksamen Durchbrüchen, wobei die Schneckenelemente gegenüber den Förderabschnitten eine resultierende Förderwirkung bis zu 20% aufweisen und mit diesen durch ineinandergreifende und sich gegenseitig abstreifende Übergangselemente kombiniert sind.

In der vorgeschlagenen Kombination erfolgt eine breite und von Rückständen freie Verteilung von Füllstoffen und Flüssigadditiven in der Polymerschmelze. Besondere Bedeutung erlangt dies bei der Herstellung von Compounds, d.h. dem Füllen und Verstärken verschiedenster Polymere in der Schmelze. Aber auch beim Legieren von Polymeren werden an eine homogene Verteilung der Substanzen in der Polymermatrix höchste Anforderungen gestellt.
Wesentlich an der Erfindung ist, dass in der gesamten Mischzone ein vielfaches Verteilen der Zusatzstoffe in der Polymermatrix dadurch erreicht ist, dass über eine bestimmte Verfahrensstrecke bei geringer Energieeinleitung eine hohe Anzahl von Stromteilungsvorgängen erfolgt. Die Verfahrenslänge des Mischabschnitts ist in Kenntnis des aufzubereitenden Rohpolymers und dessen Füllverhalten sowie der einzumischenden Füll- und Zusatzstoffen empirisch leicht bestimmbar.

Im Unterschied zur üblichen vorwiegend vom Schmelzedruck her bestimmten Förderung im Mischabschnitt vermitteln die Stegdurchbrüche in ihrer insgesamt verringerten Förderwirkung eine bis in den Hauptkanal der Schneckenelemente reichende Rotationsströmung, wodurch die Stromaufteilung vervielfacht und ein zusätzlicher Mischeffekt erzielt ist.
Ist nur ein Rückstrom wirksam, wird dieser Effekt nach einer weiteren Ausgestaltung der Erfindung gemäss Anspruch 2 weiter begünstigt.

Eine vorteilhafte Anwendung bestimmter Gangsteigungen des Grundprofils und der Durchbrüche vermitteln in dieser Hinsicht weitere Ausbildungen der Erfindung nach den Ansprüchen 3 bis 5.

Dabei hat sich gezeigt, dass in einem nach Anspruch 4 begrenzten Bereich der Anzahl von Durchbrüchen bei einer zumindest verbleibenden Kammbreite im Steg des Schneckenelements eine im Verhältnis zur Förderwirkung optimale Stromaufteilung erzielt ist.

In weiterer Ausgestaltung der Erfindung nach Anspruch 6 ist ein einheitlicher Förderstrom im Schneckenelement erzielt, während in einer Ausbildung nach Anspruch 7 innerhalb der paarweise zugeordneten Schneckenelemente eine örtliche Förderumkehr mit demgegenüber erhöhter Mischwirkung erreicht ist.

In einer weiteren Ausbildung der Erfindung nach Anspruch 8 sind unter Vermeidung rheologisch toter Ecken und unter Beibehaltung einer selbstreinigenden Wirkung über die gesamte Verfahrenslänge wirksame Materialübergänge geschaffen, ohne besondere Einleitung von Scherenergie.
Eine vorteilhafte Weiterbildung der Erfindung für einen schonenden Materialübergang ist durch die Merkmale des Anspruches 9 gekennzeichnet.

Nachfolgend wird die Erfindung an Hand eines in der Zeichnung dargestellten Ausführungsbeispiels näher erläutert.

Hierin zeigt:
- Fig. 1: den Gleichdrallschneckenkneter im Längsschnitt
- Fig. 2: einen Schnitt des Kneters längs der Schnittlinie II - II
- Fig. 3: einen Schnitt des Kneters längs der Schnittlinie III-III
- Fig. 4: eine Paarung der Schneckenelemente in der Mischzone 2 nach Fig. 1

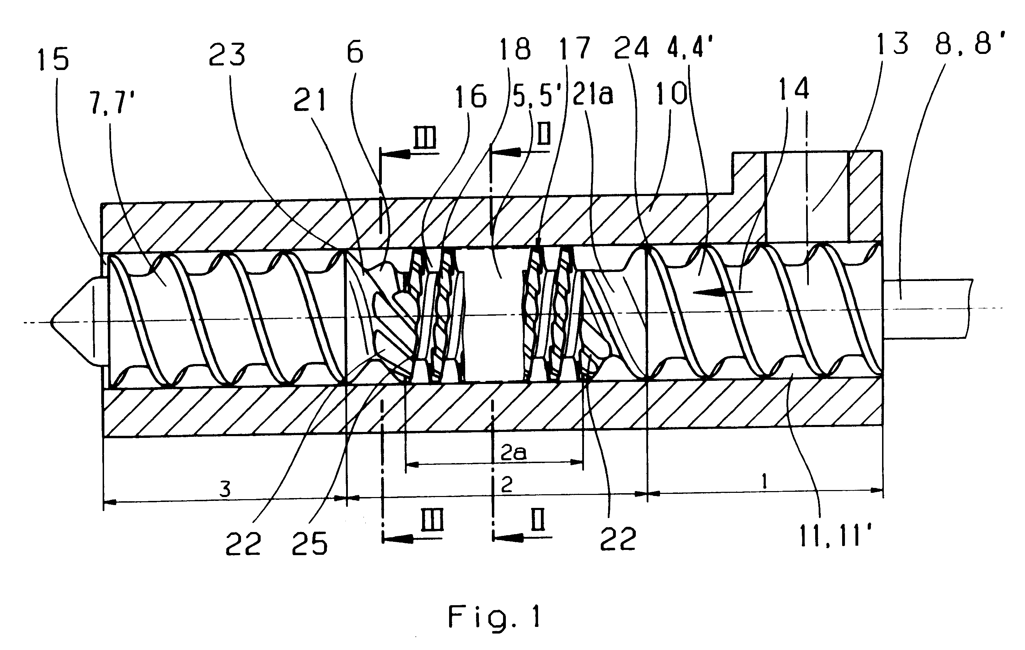

Der in Fig. 1 gezeigte Gleichdrallschneckenkneter weist drei Zonen 1 bis 3 auf, von denen die Einzugszone 1 aus zweigängigen Schnecken 4, mit hier nicht sichtbaren parallelen Schnecken 4' sich gegenseitig abstreifend kämmen. Die Mischzone 2 besteht aus Schneckenelementen 5, und den ebenfalls hier nicht sichtbaren Schneckenelementen 5', die zusammen einen Mischabschnitt 2a bilden und den sich an die Schneckenelemente 5,5' anschliessenden Paaren von Übergangselementen 6,6a. Die Austrittszone 3 schliesslich besteht wiederum aus zweigängigen Schnecken 7, die mit hier ebenfalls nicht sichtbaren parallelen Schnecken 7' abstreifend kämmen.
Mehrere Schneckenelemente 5 bzw. 5' hintereinander angeordnet ergeben die Länge des Mischabschnitts 2a.

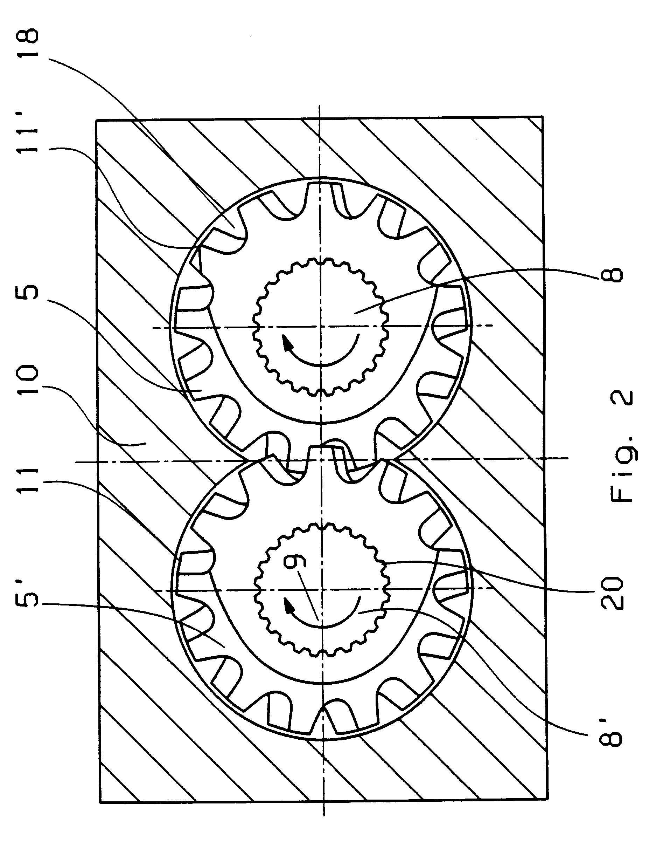

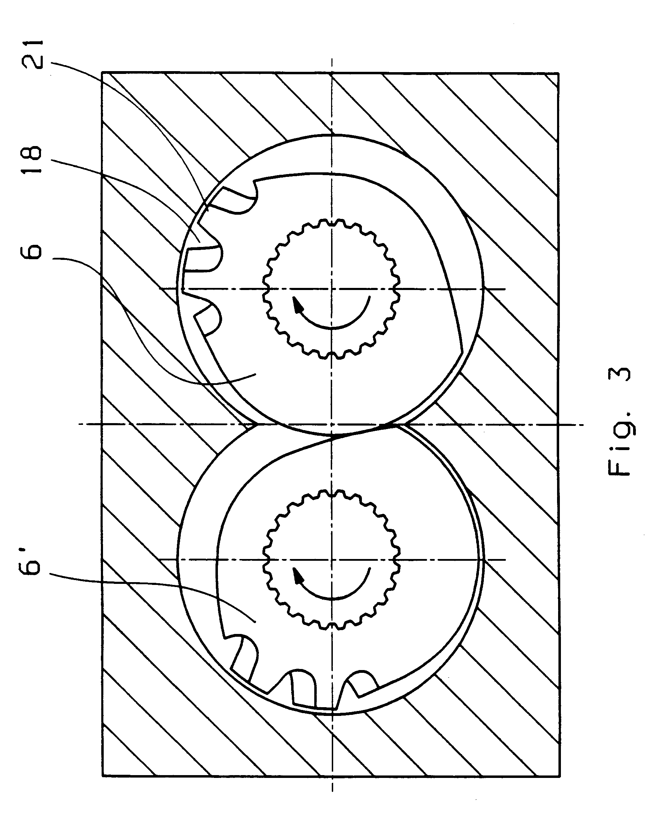

Sämtliche Schnecken 4,4' und 7,7' wie auch die Schneckenelemente 5,5' (Fig.2) bzw. die Übergangselemente 6,6' (Fig.3) sind auf den Wellen 8 und 8' aufgezogen, wobei die Kraftübertragung jeweils über eine Verzahnung 20 erfolgt. Sie sind in den sich gegenseitig durchdringenden Gehäusebohrungen 11 bzw. 11' eines Gehäuses 10 angeordnet und werden über eine nicht näher dargestellte Antriebseinrichtung in Pfeilrichtung 9 (Fig.2) angetrieben.
Für die Zuführung von Polymeren und Additiven, z.B. für das Stabilisieren, Füllen, Verstärken und Legieren von Kunststoffen ist eine Einfüllöffnung 13 im Gehäuse 10 angeordnet. Weitere nicht näher dargestellte Einfüllöffnungen für getrennt einzugebende Zusatzstoffe können in Pfeilrichtung 14 stromaufwärts auch noch innerhalb der Mischzone 2 vorgesehen sein.
Der Austrag des fertig aufbereiteten Kunststoffes erfolgt über die Austragsöffnung 15.
Während die Schnecken 4,4' und 7,7' dem Transport des Mischgutes dienen, haben die Schneckenelemente 5,5' die Aufgabe das Einmischen und Vermengen der Füllstoffe bzw. Flüssigadditive in die Polymermatrix zu bewerkstelligen.
Hierzu sind die Schneckenelemente 5,5' in besonderer Weise ausgebildet.
Sie weisen wie Fig. 1 zeigt beispielsweise eine Gangsteigung auf, die so geschnitten ist, dass in dem Schneckengang 16 das Mischgut zunächst entgegen der Förderrichtung ( Pfeil 14) der Schnecken 4,4' und 7,7' gefördert wird. Die Gangsteigung kann hierbei das 0,2 bis 0,35 fache des Schneckenaussendurchmessers betragen.
Da der zugehörige Schneckensteg 17 eine Vielzahl von in Förderrichtung geschnittener Durchbrüche 18 aufweist, wird eine resultierende Förderwirkung innerhalb des Mischabschnittes 2 von vorzugsweise 10% der Förderwirkung in der Einzugszone 1 bzw. der Austragszone 3 erreicht. Je nach Art der Durchbrüche kann diese Förderwirkung bis zu 20 % betragen, in entsprechender Auswirkung auf den Homogenisierungsgrad des Mischgutes.
Die Durchbrüche 18 weisen einen etwa V-förmig gezahnten Querschnitt auf und sind im Abstand zum Profilgrund des Schneckenelementes 5,5', d.h. zum Schneckengang 16 angeordnet.
Da die Durchbrüche förderaktiv in den rückfördernden Schneckensteg 17 eingeschnitten sind, und zwar so, dass ihre Mittenachse 19 im Bereich eines Steigungswinkels φᵥ von ca 43 bis 62 Winkelgrad zur Normalen der Schneckenachse 31 liegt, wird eine kombinierte Druck-Schleppströmung im Mischabschnitt 2a erzielt.
Einschliesslich der mit den Durchbrüchen 18 im Schneckensteg 17 erzielten mehrfachen Stromaufteilung erfolgt ein besonders intensives distributives Mischen der Komponenten des Mischgutes unter geringer Energieeinleitung.
Da in jedem Bereich zugleich eine Abreinigung der Gehäuseinnenwand erfolgt, werden sogenannte tote Ecken mit Restablagerungen von Mischgut vermieden.
Um dies ausreichend zu bewerkstelligen sind die Schneckenelemente 5,5' mit den sich und die Gehäusebohrungen 11,11' selbstreinigend abstreifenden Übergangselementen 6,6' und 6a,6a' kombiniert. Hierbei sind diese Übergangselemente wie Fig. 1 zeigt so gestaltet, dass deren Kämme 21 bzw. 21a an die Schneckenkämme 23 bzw. 24 der zweigängigen Schnecken 7,7' und 4,4' bzw. den Kämmen 25 der Schneckenelemente 5,5' unmittelbar anschliessen. Durch diese Anpassung erfolgt eine flächige Verknüpfung des Schneckensteges 17 der Schneckenelemente 5,5' mit den beiden Schneckenkämmen 23 bzw. 24 der Schnecken 4,4' und 7,7', über die Kämme 21 bzw. 21a der Übergangselemente Wie auch hierzu insbesondere Fig. 3 in Verbindung mit Fig. 1 zeigt, setzen sich die Durchbrüche 18 in den Kämmen 21 bzw. 21a der Übergangselemente 6,6' und 6a,6a' über die Gänge 22 fort, so dass ein freier Materialübertritt bewirkt ist.
In Verbindung mit der selbstreinigenden Wirkung dieser Elemente wird insgesamt eine hervorragende Verteilung der Mischkomponenten im Mischgut ohne störende Ablagerungen in den Gehäusebohrungen 11,11' oder den wirksamen Schneckenelementen und deren Übergangselementen erzielt.

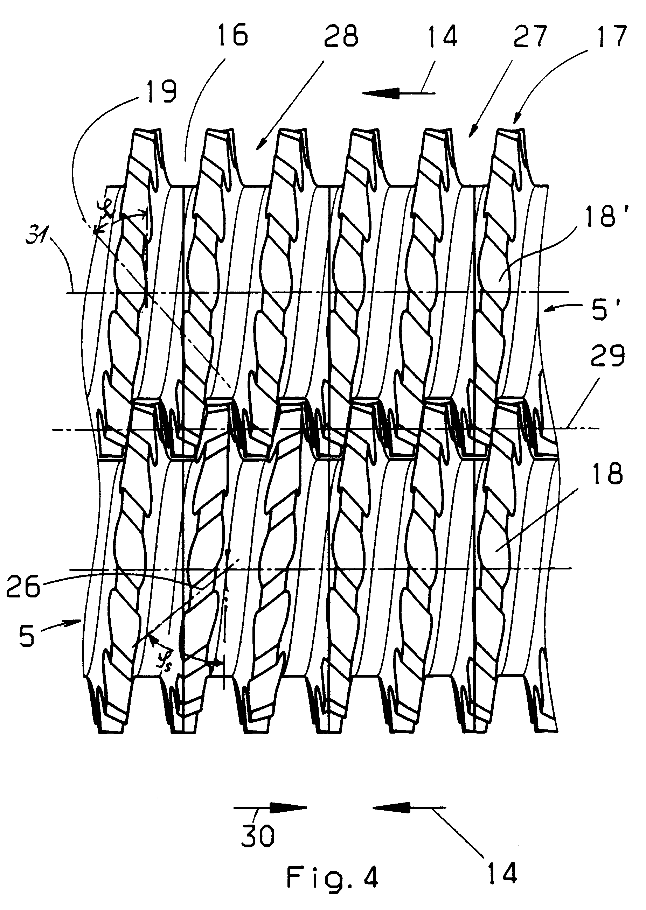

Durch eine weitere Ausbildung nach Fig. 4 wird zusätzlich eine besondere Mischwirkung noch dadurch erreicht, dass bei mehreren paarweise aufeinanderfolgend angeordneten Schneckenelementen 5,5' ein Schneckenelement 5 eines Elementenpaares 27 Durchbrüche 26 aufweist, die in entgegengesetzter Richtung fördern. Dabei ist ein Elementenpaar 27 mit Durchbrüchen 18, 18' ausgebildet, die insgesamt in Förderrichtung Pfeil 14 fördern. Ein vor- oder nachgeordnetes Elementenpaar 28 dagegen weist Durchbrüche 26 eines Schneckenelementes 5 in hierzu entgegengesetzter Förderrichtung Pfeil 30 auf. Der Steigungswinkel φₛ in Förderrichtung 30 gesehen zur Normalen der Schneckenachse beträgt 43 bis 62 Winkelgrad. Dadurch wird innerhalb des Elementenpaars 28 eine Umkehrung der Förderrichtung und somit ein in diesem Bereich über die Mittelachse 29 des Kneters etwa kreisförmig verlaufende Mischgutbewegung erzielt. Durch die hierbei erzielte zusätzliche Mischwirkung wird ein hoher Homogenisierungsgrad im Produkt erreicht.

## Patentansprüche

1. Gleichdrallschneckenkneter mit drehantreibbaren Schneckenwellen in einem Gehäuse mit achsparallelen und einander durchdringenden Gehäusebohrungen, mit Förderabschnitten in der Einzugs- und Austrittszone, die aus sich gegenseitig abstreifenden Schnecken gebildet sind und einer Mischzone mit rückfördernd ausgebildetem Mischabschnitt und einen Materialdurchtritt bewirkenden Durchbrüchen längs einer Steigung in den Schneckenstegen des Mischabschnitts, dadurch gekennzeichnet, dass der Mischabschnitt aus Schneckenelementen (5,5') gebildet ist mit in Förderrichtung fortlaufenden förderwirksamen Durchbrüchen(18), wobei die Schneckenelemente (5,5') gegenüber den Förderabschnitten eine resultierende Förderwirkung bis zu 20% aufweisen und mit diesen durch ineinandergreifende und sich gegenseitig abstreifende Übergangselemente (6,6', 6a, 6a') kombiniert sind.

2. Gleichdrallschneckenkneter nach Anspruch 1, dadurch gekennzeichnet, dass die Schneckenelemente (5,5')ein eingängiges Grundprofil aufweisen, dessen Schneckensteg (17) von V-förmigen mit sich verengendem Querschnitt und im Abstand zum Profilgrund angeordneten Durchbrüchen (18) geöffnet ist.

3. Gleichdrallschneckenkneter nach Anspruch 2, dadurch gekennzeichnet, dass die Steigung des Grundprofils das 0,2 bis 0,3 fache des Schneckenaussendurchmessers beträgt.

4. Gleichdrallschneckenkneter nach Anspruch 2, dadurch gekennzeichnet, dass die Schneckenelemente (5,5') mit in Umfangsrichtung 12 bis 16 Durchbrüchen jeweils gleichen Durchtrittsquerschnitts bei einer verbleibenden Restkammbreite des Schneckenstegs (17) von mindestens 1mm ausgebildet sind.

5. Gleichdrallschneckenkneter nach einem der Ansprüche 1 bis 4, dadurch gekennzeichnet, dass die Steigung der Durchbrüche (18) zwischen dem 2,5 bis 6fachen des Schneckenaussendurchmessers beträgt.

6. Gleichdrallschneckenkneter nach einem der vorhergehenden Ansprüche, dadurch gekennzeichnet, dass die Mittenachse der Durchbrüche (18) der paarweise angeordneten Schneckenelemente (5,5') vorzugsweise im Bereich eines Steigungswinkels (φᵥ) von 43 bis 62 Winkelgrad zur Normalen der Schneckenwellenachse (31) liegt.

7. Gleichdrallschneckenkneter nach Anspruch 6, dadurch gekennzeichnet, dass die Mittenachse der Durchbrüche (18) zumindest eines mehrerer paarweise angeordneter Schneckenelemente (5,5') entgegengesetzt fördernd im Bereich eines Steigungswinkels (φₛ) von 43 bis 62 Winkelgrad zur Normalen der Schneckenwellenachse (31) liegt.

8. Gleichdrallschneckenkneter nach Anspruch 1, dadurch gekennzeichnet, dass die Übergangselemente (6,6',6a,6a') an die Schneckenstege (17) der Förderabschnitte und des Mischabschnitts angepasste Grundkämme (21,21a) bilden, welche in der Kammbreite die radial auslaufende Mantelfläche der Schneckenelemente (5,5') mit dem radial auslaufenden Schneckenkamm (23,24) der Förderabschnitte verbinden, und die Durchbrüche (18) mit den Schneckengängen (12) der Förderabschnitte verbindende Gänge (22) aufweisen.

9. Gleichdrallschneckenkneter nach Anspruch 8, dadurch gekennzeichnet, dass die Gewindekämme (21,21a) der Übergangselemente (6,6', 6a,6a') ausgehend von einer zwei oder drei gängigen Grundsteigung der Förderabschnitte an eine eingängige Grundsteigung der Schneckenelemente (5,5') im Mischabschnitt anschliessen.

## Claims

1. Equihelical worm masticator with rotationally drivable worm shafts in a housing with axially parallel and mutually interpenetrating housing bores, with conveying portions in the intake zone and the exit zone, which portions are formed by mutually wiping worms, and with a mixing zone with a mixing portion constructed to be conveying rearwardly and openings causing a passage of material therethrough along a slope in the worm webs of the mixing portion, characterised thereby, that the mixing portion is formed of worm elements (5, 5') with openings (18), which are effective for conveying and continuing in the conveying direction, wherein the worm elements (5, 5') display a resultant conveying effect of up to 20% by comparison with the conveying portions and are combined with these by interengaging and mutually wiping transition elements (6, 6', 6a, 6a').

2. Equihelical worm masticator according to claim 1, characterised thereby, that the worm elements (5, 5') display a single-thread basic profile, the worm web (17) of which is opened by V-shaped openings (18), which are arranged at a spacing from the profile base and of narrowing cross-section.

3. Equihelical worm masticator according to claim 2, characterised thereby, that the slope of the basic profile amounts to 0.2 to 0.3 times the external worn diameter.

4. Equihelical worm masticator according to claim 2, characterised thereby, that the worm elements (5, 5') are formed with 12 to 16 passages in circunferential direction, which are each of equal passage cross-section with a remaining residual crest width of the worm web (17) of at least 1 millimetre.

5. Equihelical worm masticator according to one of the claims 1 to 4, characterised thereby, that the slope of the openings (18) amounts to between 2.5 and 6 times the external worm diameter.

6. Equihelical worm masticator according to one of the preceding claims, characterised thereby, that the centre line of the openings (18) of the worm elements (5, 5') arranged in pairs preferably lies in the range of a slope angle (φᵥ) of 43 to 62° to the normal to the worm shaft axis (31).

7. Equihelical worm masticator according to claim 6, characterised thereby, that the centre line of the openings (18) of at least one of several of the worm elements (5, 5') arranged in pairs and conveying oppositely lies in the range of a slope angle (φₛ) of 43 to 62° to the normal to the worm shaft axis (31).

8. Equihelical worm masticator according to claim 1, characterised thereby, that the transition elements (6, 6', 6a, 6a') form basic tooth crests (21, 21a), which are matched to the worm webs (17) of the conveying portions and of the mixing portion and which in the crest width connect the radially extending envelope surface of the worm elements (5, 5') with the radially extending worm crest (23, 24) of the conveying portions, and the openings (18) display threads (22) connecting with the worm threads (12) of the conveying portions.

9. Equihelical worm masticator according to claim 8, characterised thereby, that the basic tooth crests (21, 21a) of the transition elements (6, 6', 6a, 6a') - starting out from a two-thread or three-thread basic pitch of the conveying portions - adjoin a single-thread basic pitch of the worm elements (5, 5') in the mixing portion.

## Revendications

1. Pétrin à vis de pas constant, comportant : des arbres de vis qui peuvent être entraînés en rotation dans des alésages parallèles et s'entrecoupant d'un corps, dans les zones d'entrée et de sortie, des secteurs d'entraînement qui sont formés par des vis qui se nettoient mutuellement par frottement et une zone de mélangeage comportant un secteur de refoulement et des encoches provoquant le passage de la matière et disposées, le long d'une spire des filets de ce secteur de mélangeage, pétrin caractérisé en ce que le secteur de mélangeage est formé d'éléments de vis (5, 5') comportant des encoches (18) qui agissent continuellement dans le sens de l'avance, ces éléments de vis (5, 5') créant un effet d'entraînement qui peut atteindre 20 % de celui des secteurs d'entraînement et étant associés à ces derniers par l'entremise d'éléments de transition (6, 6', 6a, 6a') qui s'engagent l'un dans l'autre et se nettoient mutuellement, par frottement.

2. Pétrin à vis selon la revendication 1, caractérisé en ce que les éléments de vis (5, 5') ont un profil à une seule entrée, dont le filet (17) a une section en V décroissante et présente des encoches (18) d'ouvertures de passage disposées à distance du fond de ce filet (ou du profil de base).

3. Pétrin à vis selon la revendication 2, caractérisé en ce que le pas du profil de base représente de 0,2 à 0,3 fois le diamètre extérieur des vis.

4. Pétrin selon la revendication 2, caractérisé en ce que les éléments de vis (5, 5') comportent sur leur périphérie 12 à 16 encoches ayant la même section de passage, les parties restantes de l'arête ou crête du filet (17) ayant une largeur d'au moins 1 mm.

5. Pétrin selon l'une des revendications 1 à 4, caractérisé en ce que le pas des encoches (18) représente de 2,5 à 6 fois le diamètre extérieur des vis.

6. Pétrin selon l'une des revendications précédentes, caractérisé en ce que l'axe des encoches (18) des éléments de vis (5, 5') disposés par couples fait avantageusement un angle (φᵥ) de 43 à 62 degrés avec la normale de l'axe (31) de l'arbre des vis.

7. Pétrin selon la revendication 6, caractérisé en ce que l'axe géométrique des encoches de refoulement (26) d'au moins l'un de plusieurs éléments de vis (5, 5') disposés par coupes fait un angle (φₛ) de 43 à 62 degrés avec la normale à l'axe (31) de l'arbre des vis.

8. Pétrin selon la revendication 1, caractérisé en ce que les éléments de transition (6, 6', 6a, 6a') forment les flancs (21, 21a qui sont adaptés aux filets (17) des secteurs d'entraînement et du secteur de mélangeage, qui relient sur leur largeur la surface radialement extérieure des éléments des vis (5, 5') aux arêtes radialement extérieures des filets (23, 24) des secteurs d'entraînement, les encoches (18) comportant des passages (22) qui communiquent avec les flancs (21) de ces secteurs d'entraînement.

9. Pétrin selon la revendication 8, caractérisé en ce que les flancs (21, 21a) des éléments de transition (6, 6', 6a, 6a'), partant du pas à deux ou trois spires des secteurs d'entraînement se raccordent au pas à une spire des éléments de vis (5, 5') du secteur de mélangeage.
